# EUROPEAN PATENT APPLICATION

(11) **EP 2 515 398 A1**
(43) Date of publication of application: **24.10.2012**
(21) Application number: 11163050.5
(22) Date of filing: 19.04.2011
(51) Int. Cl.: H02B 1/38

(54) **Hinge assembly for a switchgear panel**

(71) Applicant: ABB Technology AG, 8050 Zürich (CH)
(72) Inventor: Carelli, Vittorio, 26900, Lodi (IT); Peracchi, Fabrizio, 24121, Albino (BG) (IT)
(74) Representative: De Santis, Giovanni

(57) **Abstract**

Hinge assembly for a cabinet housing of switchgear panel, comprising: plate means supporting pivot means for enabling rotation of door means of the cabinet housing about a pivotal axis between an open position and a closed position; locking protrusion means and locking seat means provided on said plate means and configured for internally receiving said locking protrusion means so as to lock said door means in said closed position.

## Description

The present disclosure relates to a hinge assembly for connecting one or more doors to the framework of cabinet housing, in particular a cabinet housing for a switchgear panel. The hinge assembly of the present disclosure is configured for providing a safe and reliable pivotal connection and a steady locking position of the door/s with respect to the framework of the cabinet housing.

The hinge assembly is particularly suitable to be used in the Medium or High Voltage field, i.e. for applications with nominal operating voltages in the range from 1kV up to some tens kV.

A known switchgear panel, also called in the art with the equivalent terms of electric switchboard, or simply switchgear or electric panel, comprises a cabinet housing which is a metallic enclosure shaped for housing apparatuses and equipments, such as a circuit breaker, bus-bars etcetera. The cabinet housing comprises a stationary framework to which a door is pivotally connected through a pair of spaced hinges. The two hinges are fixed to the framework so as to result positioned near a lower zone and an upper zone respectively of a longitudinal edge of the door, and so as to define a vertical pivotal axis for the latter. At opposite ends of the above mentioned longitudinal edge there are provided two vertically arranged pins. The pins engage with respective holes provided on horizontal plate portions of the hinges so as to enable rotation of the door with respect to the framework between an open position and a closed position, enabling and preventing access to the switchgear panel respectively. In alternative, the pins are fixed to the horizontal plate portions of the hinges and engage with respective holes provided in horizontal edges of the door, enabling rotation of the latter with respect to the framework.

Suitable bolt or other locking devices have necessarily to be provided on the door and/or on the framework in order to keep the door firmly in the closed position. This results in a cabinet housing which is structurally complex and expensive as well. It would be desirable to improve the known devices for connecting and looking the door to the framework of the cabinet housing, in particular by providing a technical solution which is at same time cheap, safe, reliable structurally not complicated and easy to be mounted to new or already existing cabinet housings.

This desire is fulfilled by a hinge assembly for a cabinet housing of switchgear panel, characterized in that it comprises:
- plate means supporting pivot means for enabling rotation of door means of said cabinet housing about a pivotal axis between an open position and a closed position;
- locking protrusion means; and
- locking seat means provided on said plate means and configured for internally receiving said locking protrusion means so as to lock said door means in said closed position.

The present disclosure also encompasses a cabinet housing for a switchgear panel, and a switchgear panel, comprising each a hinge assembly as defined in the appended claims and described hereinafter.

Further characteristics and advantages will become apparent from the description of some preferred but not exclusive embodiments of a hinge assembly according to the invention, illustrated only by way of non-limitative examples with the accompanying drawings, wherein:
figure 1 is a perspective view of two distinct doors of a cabinet housing for switchgear panel comprising a hinge assembly according to the present disclosure;
Figures 2 and 3 show enlarged details of figure 1;
figure 4 is a perspective view of a first component of the hinge assembly in figure 1;
figure 5 is a top view of the first component in figure 4;
figure 6 show a further component of the hinge assembly;
figure 7 is a perspective view of a still further component of the hinge assembly in figure 1;
figure 8 is a top view of the component in figure 7;
figure 9 is a perspective view of a second component of the hinge assembly according to the present disclosure, shown in figure 2;
figure 10 is a further perspective view showing the second component in figure 9 together with a still further component of the hinge assembly;
figure 11 is a perspective view of a cabinet housing for switchgear panel provided with the hinge assembly according to the present disclosure;
figure 12 is a front view of doors of the cabinet housing in figure 11;
figure 13 is a transverse cross-section of a hinge assembly of the cabinet housing taken along the plane XX-XX in figure 12;
figure 14 is a perspective view showing a rear side of the doors in figure 12;
figure 15 shows an enlarged detail of figure 14;
figure 16 is a further perspective view showing a rear side of a door for cabinet housing;
figure 17 is a rear side of the door in figure 16;
figure 18 is a cross-section of the door in figure 17 taken along the plane XXV-XXV;
figure 19 is a bottom view of the door in figure 17;
figure 20 show further versions of doors for a cabinet housing which may be provided with the hinge assembly of the present disclosure;
figure 21 is an enlarged detail of figure 20 showing part of a hinge assembly according to the present disclosure;
figure 22 is a further enlarged detail of figure 20 showing a further part of the hinge assembly;
figure 23 is a rear view of the doors of figure 20;
figure 24 is an enlarged detail of figure 23 showing a further part of the hinge assembly;
figure 25 is a rear view of the detail shown in figure 22;
figure 26 is a perspective view of a further door provided with the hinge assembly of the present disclosure;
figure 27 is a front view of the door in figure 26;
figure 28 is a cross-section of the door in figure 27 taken along the plane XXXV-XXXV;
figure 29 is an enlarged detail of figure 27;
figure 30 is a bottom view of the door in figure 27;
figure 31 is a perspective view, better showing the bottom side of a third component of the hinge assembly in figure 2;
figure 32 show the component of figure 31 assembled with a further component of the hinge assembly;
figure 33 shows part of a further version of a hinge assembly according to the present disclosure;
figure 34 shows a still further version of a component of the hinge assembly according to the present disclosure.

It should be noted that in the detailed description that follows, identical or similar components may have the same reference numerals, regardless of whether they are shown in different embodiments of the present invention. It should also be noted that in order to clearly and concisely disclose the present invention, the drawings may not necessarily be to scale and certain features of the invention may be shown in somewhat schematic form.

Finally, the hinge assembly of the present disclosure will be described by making reference to its use with a plurality of doors, or one door realized in two or more parts; clearly, it has to be understood that the hinge assembly according to the present disclosure may be used with a single door made of only one part.

With reference to the attached figures, a hinge assembly 1 is shown which is particularly suitable to be used in the Medium/High Voltage field, i.e. for applications in the range from 1kV up to some tens kV.

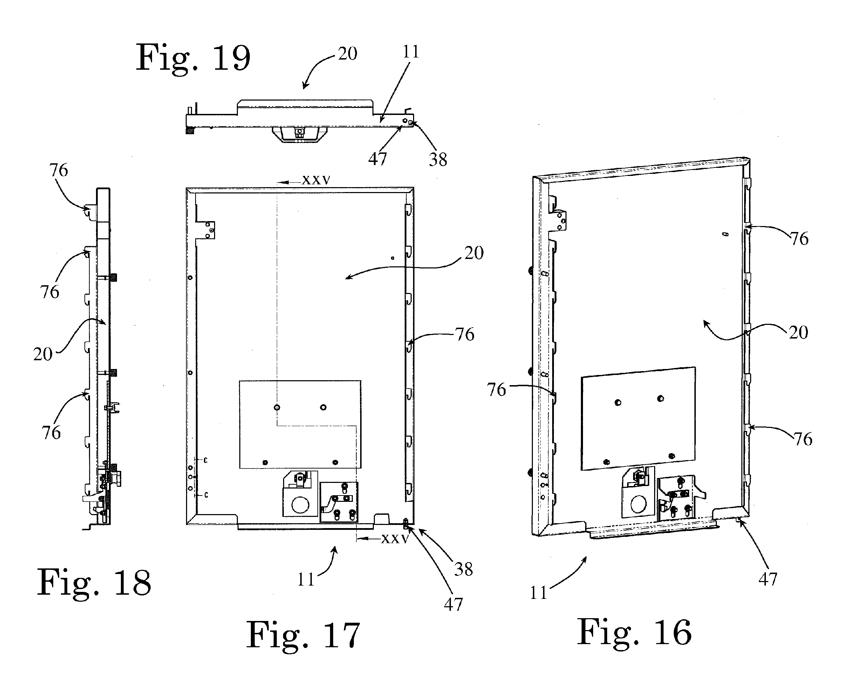

The hinge assembly 1 is used for pivotally connecting one or more doors 2 to a framework 3 of a cabinet housing 4 of a switchgear panel 5. For framework 3 is meant a skeleton, of whichever suitable shape, on which for example cover panels or plates 8 are fixed defining the cabinet housing 4; the framework 3 structurally supports the whole switchgear panel 5. The hinge assembly 1 has the function of pivotally connecting the door 2 to a front portion 7 of the framework 3 so as to enable a door 2 to move between an open position and a closed position 6, shown in Figure 18, the closed position 6 preventing access to the internal electrical equipments of the switchgear panel 5. The hinge assembly 1 also has the function of locking the door(s) 2 in the closed position 6, so as to prevent accidental opening of the cabinet housing 4, as will be better described later on.

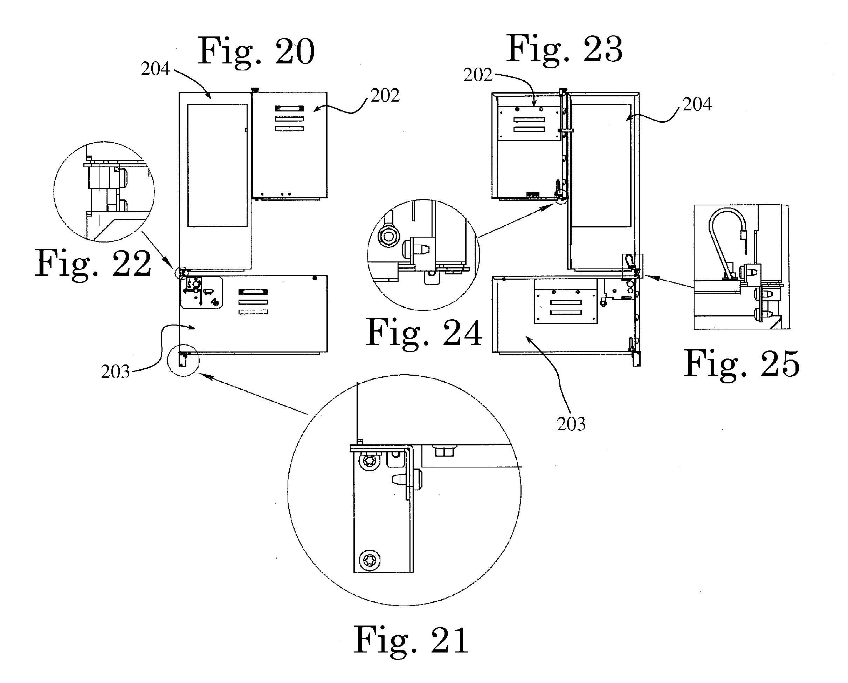

The hinge assembly 1 can be adapted to the structure of a specific cabinet housing. The hinge assembly 1 can be seen as a kit of parts intended to be associated to one or more doors 2. In other words, the hinge assembly 1 of the present disclosure may comprise a desired number of parts depending on the specific sizes and/or geometry and/or other particular requirements of the cabinet housing. For example, a cabinet housing as shown in figures 20 to 25 and having three different doors 202, 203, 204 can be provided with a suitably adapted hinge assembly 1 according to the present disclosure.

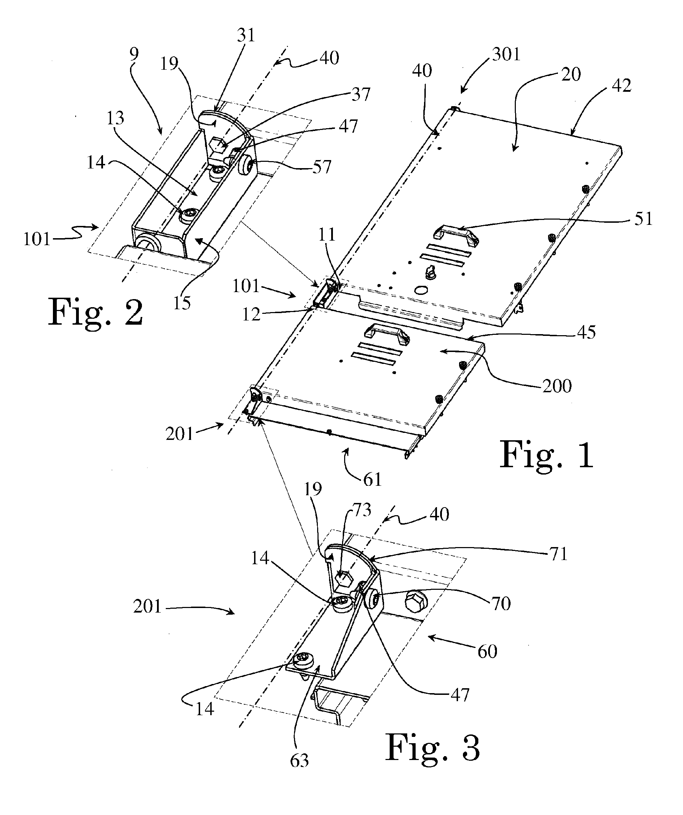

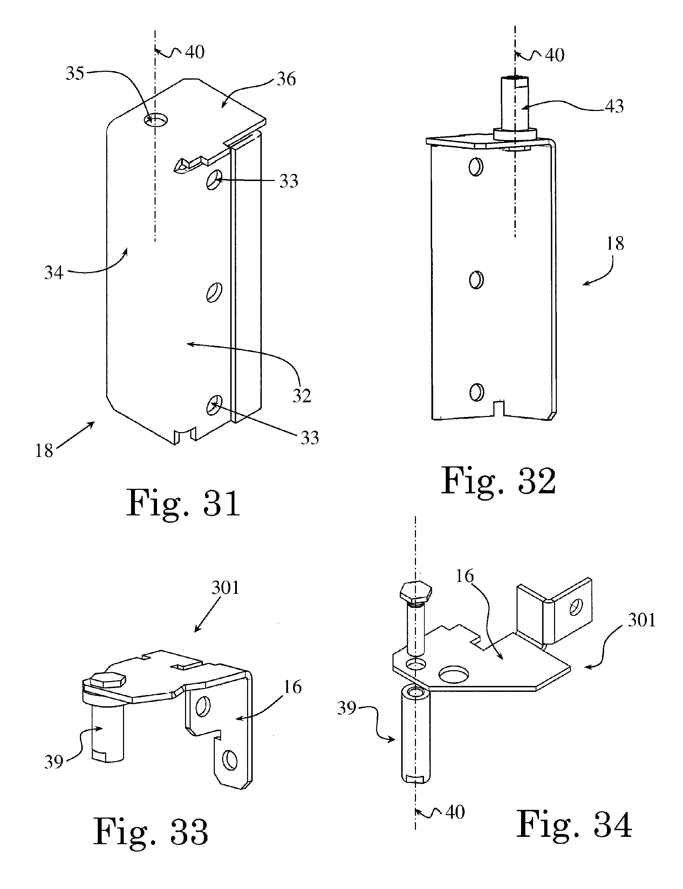

With reference to figures 1 to 3, a hinge assembly 1, coupled to a first door 20 and to a second door 200, is shown. In the exemplary embodiment illustrated, the hinge assembly 1 comprises a first part 101, better shown in figure 2, a second part 201, better shown in figure 3, and a third part 301 which is also shown in more detail in figure 33. In the example shown in figure 1, the first part 101 is hinged both to a bottom portion of the first door 20 and to an upper portion of the second door 200, the second part 201 is hinged to a bottom portion of the second door 200, and the third part 301 is hinged to an upper portion of the first door 20.

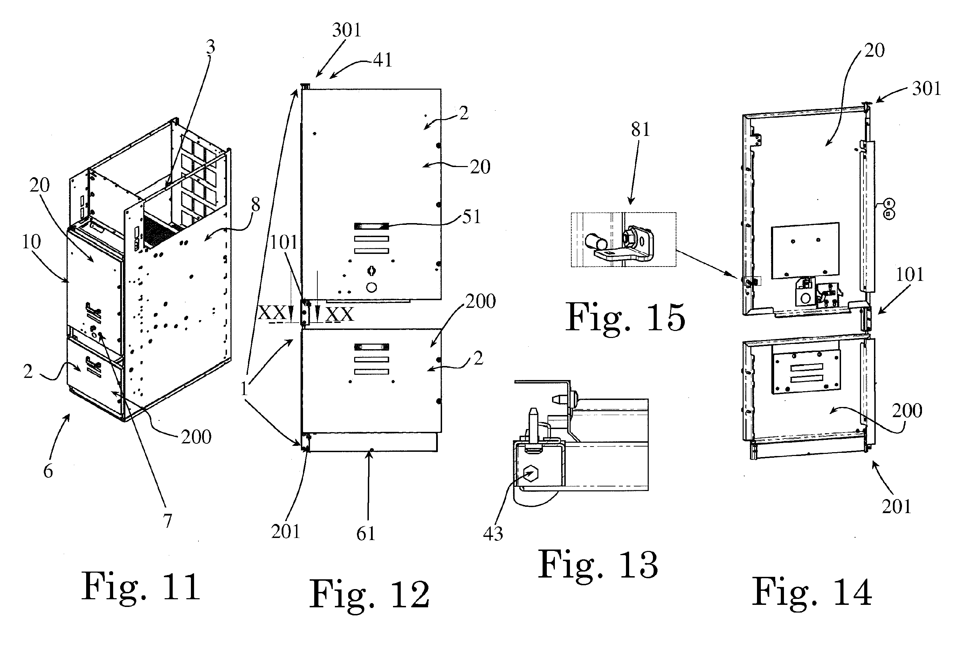

The first part 101 of the hinge assembly 1, shown in an assembled configuration in figure 2, comprises a first support body 9 intended to be fixed to a front vertical edge 10 (shown in figure 11) of the framework 3. The first support body 9 is configured for instance for pivotally connecting both a lower edge 11 of the first door 20 and an upper edge portion 12 of the second door 200 to the framework 3.

In the exemplary embodiment illustrated, the first support body 9 comprises three distinct components which are assembled together so as to define a box-shaped body. However, the first support body 9 can also be integrally provided in a one-piece-body.

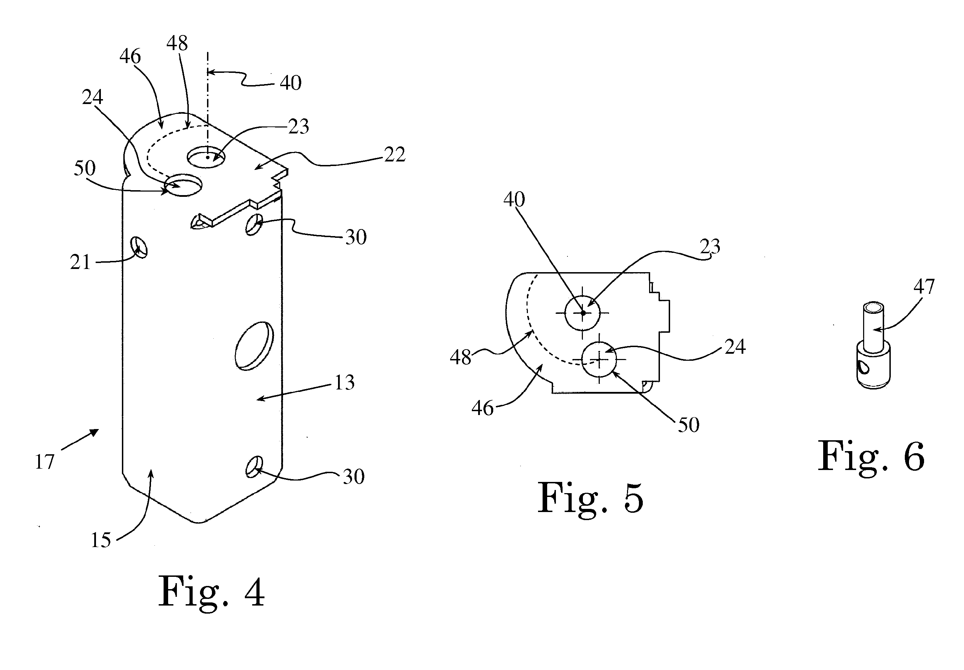

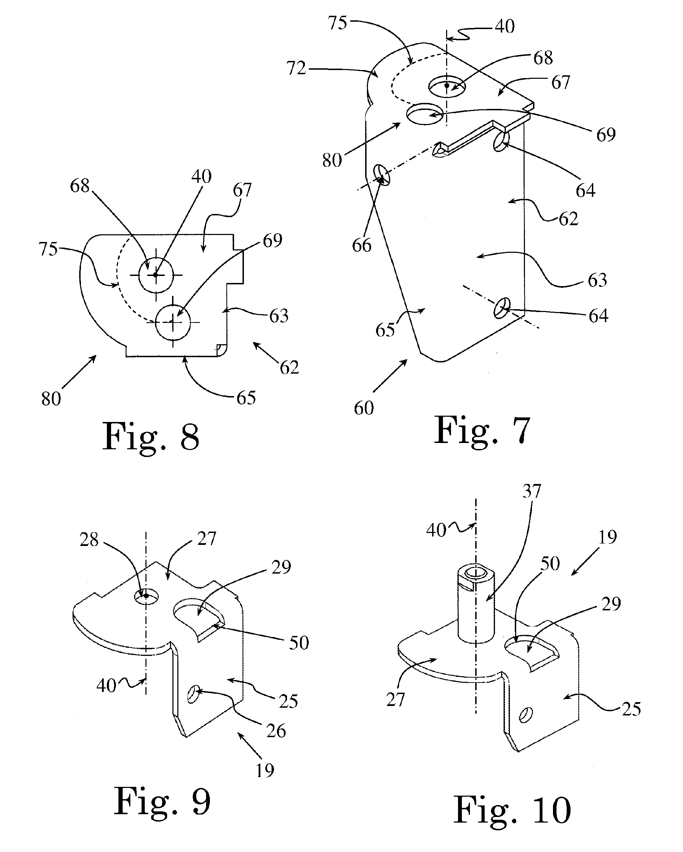

In the exemplary embodiment here described, the first support body 9 comprises a first component 17, better shown in figure 4, a second component 19, better shown in figures 9-10, and a third component 18, better shown in figures 31-32.

With reference to figures 4 and 5, the first component 17, which can be obtained from a folded metallic plate, comprises a first rest portion 13 intended to be rested and fixed, by suitable screws 14 engaging with suitable holes 30, to the vertical edge 10 of the framework 3.

The first component 17 comprises a first side wall 15 which is transversely, e.g. orthogonally, arranged with respect to the first rest portion 13 and on which a hole 21 is provided.

The first component 17 comprises a first plate portion 22 which is transversely, e.g. orthogonally arranged with respect to the first rest portion 13 and with respect to the first side wall 15. On the first plate portion 22 a first opening 23 and a second opening 24 are provided, whose functions will be explained in more details later on.

In the exemplary embodiment illustrated in figures 9-10, the second component 19, which can be obtained from a folded metallic plate, comprises a side portion 25, having a further hole 26, which is intended to be applied and fixed, for example by a further screw 57 (shown in figure 2), to the first side wall 15 of the first component 17, to the internal side thereof.

The second component 19 comprises a second plate portion 27 which is transversely, e.g. orthogonally, arranged with respect to the side portion 25 and on which a third opening 28 and a fourth opening 29 are provided.

The first plate portion 22 and the second plate portion 27 are shaped for operatively matching with one other thus defining a double thickness plate 31 (shown in Figure 2), in which the first opening 23 and the second opening 24 result aligned with the third opening 28 and the fourth opening 29, respectively.

The first opening 23 and the third opening 28 define a pivotal axis 40 for the first door 20. The second opening 24 and the fourth opening 29, better disclosed in the following, together act as a locking seat 50 for locking the first door 20 in the closed position 6. The plate 31, defined by the overlapping first plate portion 22 and second plate portion 27, when mounted on the cabinet housing 4, protrudes outside of the latter and transversely, e.g. orthogonally, to the pivotal axis 40 in such a way as to define a resting surface 46 whose function will be described later on.

In the exemplary embodiment illustrated in figures 31-32, the third component 18, which can be obtained from a folded metallic plate, comprises a second rest portion 32 intended to be rested and fixed, e.g. by the screws 14 engaging with further holes 33, to the first rest portion 13 of the first component 17, and therefore to the vertical edge 10 of the framework 3.

The third component 18 comprises a second side wall 34, which is transversely, e.g. orthogonally, arranged with respect to the second rest portion 32, and a third plate portion 36, which is transversely, e.g. orthogonally, arranged with respect to the second rest portion 32 and to the second side wall 34.

When the third component 18 is assembled to the first component 17 and to the second component 19, the second side wall 34 results parallel to, and spaced away from the first side wall 15, whereas the third plate portion 36 results parallel to, and spaced away from the double thickness plate 31.

The hinge assembly 1 comprises a first pivotal pin 37 (better visible in figures 2 and 10) which is housed in the first and third openings 23 and 28 and which is fastened to the first component 17 and to the second component 19. The first pivotal pin 37, arranged in a stationary position, protrudes upwards from the double thickness plate 31 so as to be able to pivotally couple with a first pivotal opening 38 (shown in figures 17 and 19), provided in the lower edge 11 of the first door 20, so as to enable rotation of the latter about the pivotal axis 40.

A second pivotal pin 39, included in the third part 301 of the hinge assembly 1 as better shown in figure 33 is in a stationary position and protrudes downwards so as to engage with a second pivotal opening 41 provided in an upper edge 42 of the first door 20.

In the exemplary embodiment illustrated in figure 33, the third component 301 also comprises a shaped body 16 which I suitably shaped in order to be connected to the framework 3 of the cabinet housing 4; such shaped body 16 may be obtained in one single piece of a metal sheet or in more pieces, and can have any suitable different shape, such as the one illustrated in an alternative embodiment of figure 34.

The first pivotal pin 37 and the second pivotal pin 39 are for example axially aligned to one other so as to enable the first door 20 to rotate about the pivotal axis 40 between the open position and the closed position 6.

The first pivotal pin 37 and the first pivotal opening 38 are able to mutually move in an axial direction, i.e. parallel to the pivotal axis 40. Analogously, the second pivotal pin 39 and the second pivotal opening 41 are able to mutually move in an axial direction, i.e. parallel to the pivotal axis 40.

This enables to move vertically the first door 20, when in the closed position 6, so as to reach a locking position, as it will be better described later on.

On the third plate portion 36 of the third component 18, a fifth opening 35 is provided which houses a third pivotal pin 43 engaging with a third pivotal opening 44 which is provided on a further upper edge 45 of the second door 200.

In the exemplary embodiment illustrated, the fifth opening 35 of the third component 18 results axially aligned with the first and third openings 23, 28 of the first and second components 17, 19, so as to define for the second door 200 the same pivotal axis 40 about which the first door 20 can be rotated. However, the fifth opening 35 can also be differently arranged in such a way to define a pivotal axis for the second door 200 which is different from that of the first door 20, according to specific requirements of the cabinet housing 4. The first part 101 of the hinge assembly 1 includes a first locking pin 47, shown in figures 6, 16, 17 and 19, which is suitable to be fixed to the lower edge 11 of the first door 20, so as to be parallel and in the proximity of the first pivotal pin 37. When the first door 20 is not in the closed position 6, the first locking pin 47, and thus the whole first door 20, rests on the first resting surface 46. When the first door 20 is rotated from the open position to the closed position 6, the first locking pin 47 slides on the resting surface 46 along a curved path 48, as shown in figures 4 and 5 and subsequently enters the locking seat 50 (defined by the second opening 24 and the fourth opening 29). When the first locking pin 47 reaches the locking seat 50, the first door 20 falls down by a certain amount in the locking position in which the first locking pin 47 enters the locking seat 50. In this configuration the first door 20 is firmly kept in the closed position and no movements thereof are possible without the intervention of an operator.

When opening of the first door 20 is required, the operator has to lift the first door 20 upwards by a suitable amount in order to disengage the first locking pin 47 from the locking seat 50. For this purpose, the operator may grip the first door 20 through the handle 51 provided thereon.

Once the first door 20 has been raised and the first locking pin 47 has been disengaged from the locking seat 50, the first door 20 can be partially rotated and then rested on the first resting surface 46. Once the first locking pin 47 rests on the first resting surface 46, the first door 20 needs no longer to be kept raised by the operator and can simply be rotated to the open position by making the first locking pin 47 run along the curved path 48.

The second part 201 of the hinge assembly 1, shown in an assembled configuration in figure 3 is described in the following. Some of components or elements included in the second part 201 are identical to corresponding components or elements included in the first part 101 which have been above disclosed, for example the second component 19 or the locking pin 47.

In the exemplary embodiment illustrated, the second part 201 comprises a second support body 60 intended to be fixed to the front vertical edge 10 (shown in figure 11) of the framework 3. The second support body 60 is configured for pivotally connecting a further lower edge 11 of the second door 200 to the framework 3.

As illustrated, the second support body 60 comprises for example two distinct components which are assembled together so as to define a single body; however, the second support body 60 can also be integrally obtained in a one-piece-body.

In the exemplary embodiment here described, the second support body 60 comprises a fourth component 62, better shown in figures 7-8, and a further second component 19, i.e. identical to the second component 19 above described in connection with the first part 101 of the hinge assembly 1 and shown in figures 9-10.

With reference to figures 7-8, the fourth component 62, which can be obtained from a folded metallic plate, comprises a third rest portion 63 intended to be rested and fixed, for instance by suitable screws 14 engaging with suitable holes 64, to the vertical edge 10 of the framework 3.

The fourth component 62 comprises a third side wall 65 which is transversely, e.g. orthogonally, arranged with respect to the third rest portion 63 and on which a further hole 66 is provided.

The fourth component 62 comprises a fourth plate portion 67 which is transversely, e.g. orthogonally, arranged with respect to the third rest portion 63 and with respect to the third side wall 65. On the fourth plate portion 67 a sixth opening 68 and a seventh opening 69 are provided, whose function is analogous to that of the third and fourth openings 28, 29 above described in connection with the first part 101 of the hinge assembly 1.

The further second component 19 is assembled to the fourth component 62. In particular the side portion 25 is applied and fixed for example by a further screw 70 (shown in figure 3), to the internal side of the third side wall 65 of the fourth component 62.

The fourth plate portion 67 and the second plate portion 27 are shaped for matching with one other thus defining a further double thickness plate 71 (shown in figure 3), in which the sixth opening 68 and the seventh opening 69 result aligned with the third opening 28 and the fourth opening 29 respectively, in an analogous manner as for the double thickness plate 31 of the first part 101 previously described.

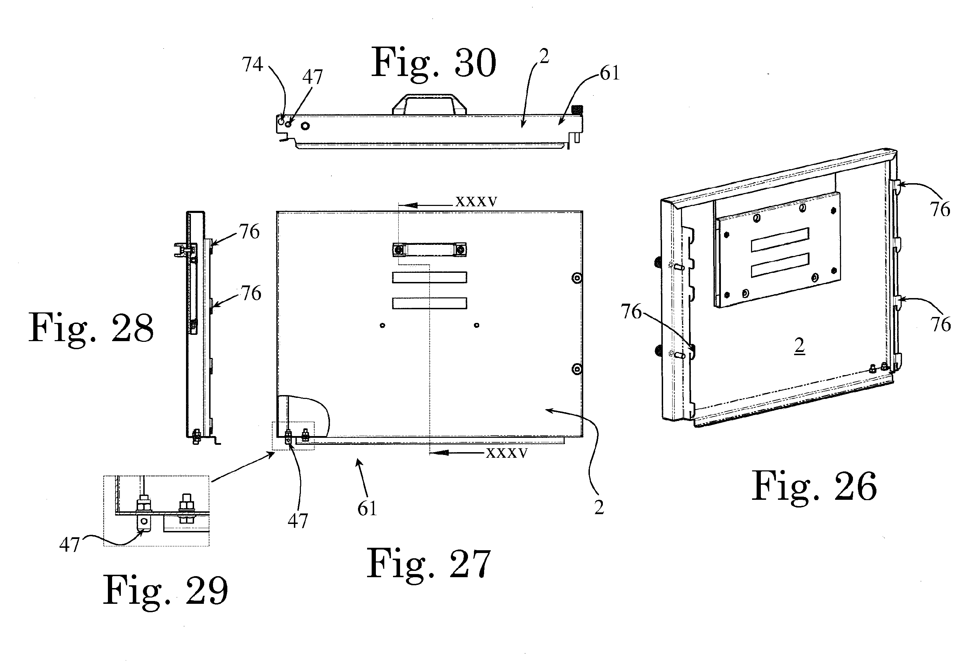

The sixth opening 68 and the seventh opening 69 are axially aligned along the above mentioned pivotal axis 40. The seventh opening 69 and the fourth opening 29 together act as a second locking seat 80 for locking the second door 200 in the closed position 6. The further plate 71, when mounted on the cabinet housing 4, protrudes outside of the latter and transversely, e.g. orthogonally, with respect to the pivotal axis 40 in such a way as to define a second resting surface 72, better shown in figure 7, whose function will be described later on. The second part 201 of the hinge assembly 1 comprises a fourth pivotal pin 73 (visible in figure 3) which is fixedly housed in the sixth opening 68 so as to protrudes upwards from the further plate 71 towards the lower edge 61 of the second door 200. The fourth pivotal pin 73, arranged in a stationary position, pivotally couples with a fourth pivotal opening 74 (better shown in figure 30) provided in the lower edge 61 of the second door 200, so as to enable rotation of the latter about the pivotal axis 40. Therefore, the fourth pivotal pin 73 is axially aligned with the third pivotal pin 43 engaging with the upper edge 45 of the second door 200. The fourth pivotal pin 73 and the fourth pivotal opening 74 are able to mutually move in an axial direction, i.e. parallel to the pivotal axis 40. Analogously, the third pivotal pin 43 and the third pivotal opening 44 are able to mutually move in an axial direction, i.e. parallel to the pivotal axis 40.

This enables the second door 200 to be moved vertically, when in the closed position 6, so as to reach a locking position, as it will be described in the following.

The second part 201 of the hinge assembly 1 includes a second locking pin 47 (better shown in figures 27 and 29) which is suitable to be fixed to the lower edge 61 of the second door 200, so as to result parallel and in the proximity of the fourth pivotal pin 73. When the second door 200 is not in the closed position 6, the second locking pin 47, and thus the whole second door 200, rests on the second resting surface 72. When the second door 200 is rotated from the open position to the closed position 6, the second locking pin 47 slides on the second resting surface 72 along a further curved path 75 (shown in figure 7) and subsequently enters the second locking seat 80. When the second locking pin 47 reaches the second locking seat 80, the second door 200 falls down by a certain amount in the locking position in which the second locking pin 47 enters the second locking seat 80. In this configuration the second door 200 is firmly kept in the closed position and no movements thereof are possible without the intervention of an operator.

When opening of the second door 200 is required, the same procedure above described for the first door 20 is to be followed by the operator.

As better shown in figures 16-18, 26,and 28, the first door 20 and the second door 200 are provided, along vertical edges thereof, with a plurality of locking hooks 76 which are configured for engaging, in the closed position 6, with corresponding locking slots provided on vertical edges of the cabinet framework 3. When the doors 2 (or 20, 200), in the closed position 6, are lowered as previously described, the locking hooks 76, engage with the corresponding locking slots and contribute to firmly keep the doors 2 in the closed position 6 thus preventing any accidental opening thereof. A further key locking device 81, as shown in figure 15, can be provided on the first door 20, or also on the second door 200, for furthermore preventing undesired opening of the cabinet housing 4.

The hinge assembly 1 above disclosed is structurally simpler and cheaper to be obtained if compared with prior art locking devices. Furthermore, the hinge assembly 1 is very safe, reliable and easy to be mounted also on existing cabinet housings and - as mentioned above - can be used with a different number of doors, for example two doors as illustrated in figures 1 and 11-19, or three doors as illustrated in figures 20-30. As mentioned, the hinge assembly 1 can also used for connecting only one door 2; in this case, the hinge assembly 1 needs only the top component 301 and alternatively the first component 101 or the second component 201 which can be placed at the lower edge of the single door.

The position, dimensions, and number of the forming elements of the first part 101 and/or of the second part 201 and/or of the third part 301 can be chosen according to desired requirements. Different configurations of the hinge assembly 1 may also be envisaged. For example, the pivotal pins 37, 39, 43, 73, instead of being fixed in stationary position to the framework 3, can be fixed to the respective doors 2. In this case the corresponding pivotal openings 38, 41, 44, 74 should be provided on the parts of the hinge assembly 1 which are fixed to the framework 3.

Analogously, the two locking pins 47, instead of being fixed to the respective doors 2, can be placed in a stationary position on the framework 3. In this configuration, corresponding pivotal openings for cooperating with the locking pins 47 could be fixed on the respective doors. In this case, the plate portions, on which the pivotal openings are provided, should protrude from edges of the respective door towards the internal zone of the cabinet housing, i.e. in an opposite direction with respect to the plate portions 22, 27, 36, above described. This configuration enables the plate portions, when the doors open, to be able to rest on the respective stationary locking pins.

In further possible versions not shown, all or some of the elements included in the hinge assembly 1 can be integrally obtained on the framework 3 and/or on the doors 2 of the cabinet housing 4.

The hinge assembly 1 according to the present disclosure above disclosed fully achieves the aims of providing an effective, and structurally not complicated hinge assembly which ensures to a cabinet housing a reliable and safe closing and locking configuration and which also proves to be easily mounted also on existing cabinet housings.

The hinge assembly 1 is susceptible of modifications or variations all within the scope of the inventive concept as defined in the appended claims.

## Claims

1. Hinge assembly (1) for a cabinet housing (4) of switchgear panel (5), **characterized in that** it comprises:
- plate means (22, 27, 31; 67, 71) supporting pivot means (23, 28, 37, 38; 68, 73, 74) for enabling rotation of door means (2, 20; 200) of said cabinet housing (4) about a pivotal axis (40) between an open position and a closed position (6);
- locking protrusion means (47); and
- locking seat means (24, 29, 50; 69, 80) provided on said plate means (22, 27, 31; 67, 71) and configured for internally receiving said locking protrusion means (47) so as to lock said door means (2, 20; 200) in said closed position (6).

2. Hinge assembly (1) according to claim 1, wherein said locking protrusion means (47) and said locking seat means (24, 29, 50; 69, 80) are mutually movable in a transverse direction with respect to said pivotal axis (40) upon a rotation of said door means (2, 20; 200).

3. Hinge assembly (1) according to claim 1 or 2, wherein said locking protrusion means (47) and said locking seat means (24, 29, 50; 69, 80) are mutually movable in a direction which is parallel to said pivotal axis (40) when said door means (2, 20, 200) are in said closed position (6).

4. Hinge assembly (1) according to one or more of the preceding claims, wherein said plate means (22, 27, 31; 67, 71), in use, extend so as to lye in a plane which is transversal to said pivotal axis (40).

5. Hinge assembly (1) according to one or more of the preceding claims, wherein said plate means comprise plate portions (22, 27, 31; 67, 71) suitable for being fixed, in a stationary position, to a framework edge (10) of said cabinet housing (4), said locking seat means comprising locking openings means (24, 29, 50; 69, 80) provided on said plate portions (22, 27, 31; 67, 71).

6. Hinge assembly (1) according to claim 5, wherein said locking protrusion means (47) comprise locking pin means (47) intended to be fixed to said door means (2, 20, 200) so as to be movable together with said door means (2, 20, 200) between said open position and said closed position (6) in a direction parallel to said pivotal axis (40) in said closed position (6) in order to be housed in said locking openings means (24, 29, 50; 69, 80).

7. Hinge assembly (1) according to one or more of the preceding claims, wherein resting path means (48; 75) are defined on said plate means (22, 27, 31; 67, 71) on which said locking pin means (47) may rest and along which said locking pin means (47) may run when said door means (2, 20, 200) are moved from said closed position (6) to said open position and vice versa.

8. Hinge assembly (1) according to one or more of the preceding claims 1 to 4, wherein said locking protrusion means comprises locking pin means (47) integrally provided on, or suitable for being fixed to, a framework edge (10) of said cabinet housing (4) so as to be placed in a stationary position.

9. Hinge assembly (1) according to claim 8, wherein said plate means are integrally provided on, or are suitable for being fixed to, edge zones (11, 61) of said door means (2, 20, 200), so as to be movable around said pivotal axis (4) together with said door means (2, 20, 200), said locking seat means comprising locking opening means provided on said plate means for cooperating with said locking pin means (47) in said closed position (6).

10. Hinge assembly (1) according to claim 9, wherein said plate means are movable, together with said door means (2, 20, 200), parallel to said pivotal axis (40) in said closed position (6) so as to enable said locking opening means to couple with said locking pin means (47).

11. Hinge assembly (1) according to claim 9 or 10, wherein said plate means are shaped so as to rest on said locking pin means (47) when said door means (2, 20, 200) are not in said closed position (6).

12. Hinge assembly (1) according to one or more of the preceding claims, wherein said pivot means comprise pivot pin means (37; 73) intended to be placed in a stationary position with respect to said cabinet housing (4), and pivot opening means (38; 74) intended to be provided on said door means (2, 20; 200) and shaped for pivotally coupling with said pivot pin means (37; 73).

13. Hinge assembly (1) according to one or more of claims 1 to 11, wherein said pivot means comprise pivot pin means suitable to be fixed to said door means (2, 20; 200), and pivot opening means placed in a stationary position on said cabinet housing (4) for pivotally coupling with said pivot pin means.

14. Hinge assembly (1) according to one or more of the preceding claims comprising further pivot means (39, 41; 43, 44) arranged at opposite zones with respect to said pivot means (23, 28, 37, 38; 68, 73, 74) for hinging said door means (2, 20; 200) to said cabinet housing (4).

15. Cabinet housing (4) for switchgear panel (5), wherein it comprises a hinge assembly (1) according to one or more of the preceding claims.

16. A switchgear panel (5) comprising a hinge assembly according to one or more of the preceding claims.
